# EUROPEAN PATENT APPLICATION

(11) **EP 3 878 932 A1**
(43) Date of publication of application: **15.09.2021**
(21) Application number: 19882741.2
(22) Date of filing: 07.11.2019
(51) Int. Cl.: C10M 169/04, C10M 135/18, C10M 137/10, C10N 10/02, C10N 10/04, C10N 10/12, C10N 30/00, C10N 30/06, C10N 40/25

(54) **LUBRICANT OIL COMPOSITION FOR INTERNAL COMBUSTION ENGINES AND METHOD FOR PRODUCING SAME, AND METHOD FOR PREVENTING PRE-IGNITION**

(30) Priority: 09.11.2018 JP 2018211709
(71) Applicant: Idemitsu Kosan Co.,Ltd., Chiyoda-ku Tokyo 100-8321 (JP)
(72) Inventor: SHIMIZU, Yasunori, Ichihara-shi, Chiba 299-0107 (JP); ISHIKAWA, Motoharu, Ichihara-shi, Chiba 299-0107 (JP)
(74) Representative: Hoffmann Eitle
(86) International application number: PCT/JP2019/043659
(87) International publication number: WO 2020/095989

(57) **Abstract**

Provided are: a lubricating oil composition for internal combustion engines containing a base oil (A), a metal-based detergent (B) containing a calcium-based detergent (B1), a zinc dialkyldithiophosphate (C), and a molybdenum-containing compound (D), wherein the calcium atom-equivalent content of the component (B1) is more than 100 ppm by mass and 600 ppm by mass or less based on the total amount of the lubricating oil composition, the magnesium atom-equivalent content of a magnesium-based detergent (B2) is less than 200 ppm by mass based on the total amount of the lubricating oil composition, the sodium atom-equivalent content of a sodium-based detergent (B3) is less than 200 ppm by mass based on the total amount of the lubricating oil composition, the content ratio of the phosphorus atom derived from the component (C) to the calcium atom derived from the component (B1) [P/Ca] is 0.25 or more by mass, and the sulfated ash content is 0.7% by mass or less; and a method for producing the lubricating oil composition. Also provided is a method for suppressing pre-ignition, using the lubricating oil composition for internal combustion engines. The lubricating oil composition has a sufficient friction-reducing effect, can prevent an occurrence of LSPI in spark-ignition internal combustion engines, and has reduced adverse effects on exhaust gas purification devices. The invention provides the lubricating oil composition for internal combustion engines, a method for producing it, and a method for suppressing pre-ignition using the lubricating oil composition for internal combustion engines.

## Description

### Technical Field

The present invention relates to a lubricating oil composition for internal combustion engines and a method for producing the same, and to a method for suppressing pre-ignition.

### Background Art

In recent years, in order to improve the fuel consumption of spark-ignition internal combustion engines such as gasoline engines, introduction of an engine equipped with a forced-induction mechanism, such as a turbocharger and a supercharger, is advancing. In addition, by direct injection of a forced-induction mechanism-equipped engine, it is possible to increase a torque at a lower-speed revolution and to decrease a displacement while keeping an equivalent power. For that reason, the fuel consumption can be improved, and a proportion of the mechanical loss can be reduced.

But, in the direction-injection forced-induction mechanism-equipped engine, a phenomenon called low-speed pre-ignition (hereinafter referred to as "LSPI") that may occur intermittently at the time of low-speed high-load operation is problematic. The LSPI is an uncontrollable explosion to occur earlier than a set-up ignition timing in a low-speed high-load operation state owing to any other ignition source than an ignition device, thereby causing ignition on flammable elements in a combustion room, and caused by the ignition, there may occur an abnormal combustion in an engine cylinder. Consequently, an occurrence of LSPI may have any adverse effect on fuel consumption and may cause engine failures.

In order to improve the detergency, a metal-based detergent is blended in a lubricating oil composition.

A calcium-based detergent is frequently used as the metal-based detergent, but in a lubricating oil composition in which a blending amount of the calcium-based detergent is increased in order to enhance the detergency, there is a case where when the lubricating oil invades into an engine cylinder, LSPI is induced.

Regarding a lubricating oil for suppressing an occurrence of LSPI, PTL 1 discloses a technique of controlling the content of an overbased calcium-derived calcium atom to be 900 ppm by mass or more and 2400 ppm by mass or less relative to the lubricating oil.

PTL 2 discloses a method for preventing or reducing low-speed pre-ignition, using a compounded oil that has a composition containing a lubricant oil base stock as a main component, and at least one zinc-containing compound or an at least one anti-wear agent as a side component.

PTL 3 discloses a method for reducing LSPI, including supplying a lubricant composition that contains a base oil and an overbased metallic detergent.

### Citation List

### Patent Literature

PTL 1: WO2017/011691
PTL 2: JP 2017-514984 T
PTL 3: JP 2016-534216 T

### Summary of Invention

### Technical Problem

Incidentally, a lubricating oil composition is required to have a reduced metal-derived ash content for securing the lifetime of an exhaust gas purification device such as DPF (diesel particulate filter) to be used for enhancing the compatibility with emission control regulations. The technique of PTL 1 is such that the overbased calcium-derived calcium atom content is 900 ppm by mass or more, and therefore still has room for improvement in point of reduction in ash.

PTL 2 discloses a lubricating oil having a reduced content of a calcium-based detergent or not using a calcium-based detergent, to which, however, a large amount of a detergent containing any other metal or a zinc-containing compound is added in place of the reduced amount of the calcium-based detergent therein, and accordingly, this is still insufficient in point of ash reduction.

PTL 3 discloses a composition in which the content of the calcium-based detergent is reduced markedly, saying that, by replacing a part of the calcium-based detergent with a magnesium-based detergent or a sodium-based detergent, an occurrence of LSPI can be suppressed. In addition, PTL 2 also discloses a case of using a magnesium-based detergent in a composition not using a calcium-based detergent.

However, the present inventors have investigated the performance of the lubricating oil composition in which the content of a calcium-based detergent has been reduced, under high-load operation conditions (for example, operation under a brake mean effective pressure of 20 bar or more), and have newly found the following problems (1) to (3).
(1) In high-load environments, LSPI still occurs even in the case where the content of the calcium-based detergent is greatly reduced.
(2) When a magnesium-based detergent is added in a state where the content of the calcium-based detergent is greatly reduced, the friction coefficient of the lubricating oil composition increases.
(3) In high-load environments, LSPI still occurs even in the case where a part of the calcium-based detergent is replaced with a sodium-based detergent.

Specifically, in the case where a lubricating oil composition in which the content of the calcium-based detergent is reduced is used in high-load environments, there still exists a problem of LSPI, and additionally as the case may be, the intrinsic object of improving the fuel consumption of engines equipped with a forced-induction mechanism could not be sufficiently attained owing to the increase in the friction coefficient.

The present invention has been made in consideration of the above-mentioned problems, and an object thereof is to provide a lubricating oil composition for internal combustion engines and a method for producing the same, which has a sufficient friction-reducing effect, can prevent an occurrence of LSPI in spark-ignition internal combustion engines, and has reduced adverse effects on exhaust gas purification devices, and to provide a method for suppressing pre-ignition using the lubricating oil composition for internal combustion engines.

### Solution to Problem

The present inventors have found that a lubricating oil composition for internal combustion engines, which contains a base oil, a metal-based detergent containing a specific amount of a calcium-based detergent, a zinc dialkyldithiophosphate incorporated in a specific ratio relative to the calcium-based detergent, and a molybdenum-containing compound and in which the content of a magnesium-based detergent and a sodium-based detergent and a sulfated ash content each are controlled to fall within a specific range, can solve the above-mentioned problems, and have completed the present invention.

Specifically, the present invention provides the following [1] to [8].
[1] A lubricating oil composition for internal combustion engines, containing:
   a base oil (A),
   a metal-based detergent (B) containing a calcium-based detergent (B1),
   a zinc dialkyldithiophosphate (C), and
   a molybdenum-containing compound (D),
   wherein:
      the calcium atom-equivalent content of the component (B1) is more than 100 ppm by mass and 600 ppm by mass or less based on the total amount of the lubricating oil composition,
      the magnesium atom-equivalent content of a magnesium-based detergent (B2) is less than 200 ppm by mass based on the total amount of the lubricating oil composition,
      the sodium atom-equivalent content of a sodium-based detergent (B3) is less than 200 ppm by mass based on the total amount of the lubricating oil composition,
      the content ratio of the phosphorus atom derived from the component (C) to the calcium atom derived from the component (B1) [P/Ca] is 0.25 or more by mass, and
      the sulfated ash content is 0.7% by mass or less.
[2] The lubricating oil composition for internal combustion engines according to the above [1], wherein the molybdenum atom-equivalent content of the component (D) is 50 ppm by mass or more and 600 ppm by mass or less based on the total amount of the lubricating oil composition.
[3] The lubricating oil composition for internal combustion engines according to the above [1] or [2], wherein the component (D) is one or more selected from the group consisting of a molybdenum dithiocarbamate (D1) and a molybdenum dithiophosphate (D2).
[4] The lubricating oil composition for internal combustion engines according to any of the above [1] to [3], wherein the phosphorus atom-equivalent content of the component (C) is 100 ppm by mass or more based on the total amount of the lubricating oil composition.
[5] A method for suppressing pre-ignition, using the lubricating oil composition for internal combustion engines of any of the above [1] to [4] to lubricate a spark-ignition internal combustion engine.
[6] The method for suppressing pre-ignition according to the above [5], wherein the spark-ignition internal combustion engine is driven under a load of a brake mean effective pressure (BMEP) of 20 bar or more.
[7] The method for suppressing pre-ignition according to the above [5], wherein the lubricated spark-ignition internal combustion engine is driven under a low-load condition at a rotation number of 2000 rpm, at a torque of 32 Nm and under a brake mean effective pressure of 2 bar for 5 minutes and then driven under a high-load condition at a rotation number of 2000 rpm, at a torque of 350 Nm and under a brake mean effective pressure of 22 bar for 15 minutes, as one combustion cycle, and when the engine is driven for a total of 9 combustion cycles, the total number of pre-ignitions having occurred under the high-load condition is 3 or less.
[8] A method for producing a lubricating oil composition for internal combustion engines, including mixing:
   a base oil (A),
   a metal-based detergent (B) containing a calcium-based detergent (B1),
   a zinc dialkyldithiophosphate (C), and
   a molybdenum-containing compound (D),
   wherein:
      the calcium atom-equivalent content of the component (B1) is more than 100 ppm by mass and 600 ppm by mass or less based on the total amount of the lubricating oil composition,
      the magnesium atom-equivalent content of a magnesium-based detergent (B2) is less than 200 ppm by mass based on the total amount of the lubricating oil composition,
      the sodium atom-equivalent content of a sodium-based detergent (B3) is less than 200 ppm by mass based on the total amount of the lubricating oil composition,
      the content ratio of the phosphorus atom derived from the component (C) to the calcium atom derived from the component (B1) [P/Ca] is 0.25 or more by mass, and
      the sulfated ash content is 0.7% by mass or less.

### Advantageous Effects of Invention

According to the present invention, there can be provided a lubricating oil composition for internal combustion engines and a method for producing the same, which has a sufficient friction-reducing effect, can prevent an occurrence of LSPI in spark-ignition internal combustion engines, and has reduced adverse effects on exhaust gas purification devices, and a method for suppressing pre-ignition using the lubricating oil composition for internal combustion engines.

### Description of Embodiments

Hereinunder the present embodiment is described. In the present specification, numeral values for "or more", "or less", "less than" and "more than" relating to a description of numerical ranges can be combined in any arbitrary manner.

In the present specification, the kinematic viscosity at 40°C and 100°C, and the viscosity index are values measured or calculated according to JIS K2283:2000.

In the present specification, the content of a calcium atom, a magnesium atom, a sodium atom, a phosphorus atom, a zinc atom and a molybdenum atom means a value measured according to ASTM D4951.

### [Lubricating Oil Composition for Internal Combustion Engines]

The lubricating oil composition for internal combustion engines of the present embodiment (hereinafter this may be simply referred to as "lubricating oil composition") contains:
a base oil (A),
a metal-based detergent (B) containing a calcium-based detergent (B1),
a zinc dialkyldithiophosphate (C), and
a molybdenum-containing compound (D),
wherein:
   the calcium atom-equivalent content of the component (B1) is more than 100 ppm by mass and 600 ppm by mass or less based on the total amount of the lubricating oil composition,
   the magnesium atom-equivalent content of a magnesium-based detergent (B2) is less than 200 ppm by mass based on the total amount of the lubricating oil composition,
   the sodium atom-equivalent content of a sodium-based detergent (B3) is less than 200 ppm by mass based on the total amount of the lubricating oil composition,
   the content ratio of the phosphorus atom derived from the component (C) to the calcium atom derived from the component (B1) [P/Ca] is 0.25 or more by mass, and
   the sulfated ash content is 0.7% by mass or less.

### <Sulfated Ash Content>

The sulfated ash content in the lubricating oil composition of the present embodiment is 0.7% by mass or less, and accordingly, there can be provided a lubricating oil composition for internal combustion engines, which has reduced adverse effects on exhaust gas purification devices.

The sulfated ash content in the lubricating oil composition of the present embodiment is, from the viewpoint of providing a lubricating oil composition for internal combustion engines which has more reduced adverse effects on exhaust gas purification devices, preferably 0.5% by mass or less, more preferably 0.4% by mass or less, even more preferably 0.3% by mass or less. The lower limit of the sulfated ash content is not specifically defined, but may be 0.1% by mass or more in consideration of the balance with other properties.

The sulfated ash content can be measured according to JIS K2272:1998.

The components contained in the lubricating oil composition of the present embodiment are described below.

### <Base Oil (A)>

The base oil (A) to be contained in the lubricating oil composition of the present embodiment may be any one containing one or more selected from a mineral oil and a synthetic oil.

Examples of the mineral oil include atmospheric residues obtained through atmospheric distillation of crude oils such as paraffin-based crude oils, intermediate-based crude oils and naphthene-based crude oils; distillates obtained through reduced-pressure distillation of such atmospheric residues; and mineral oils obtained by purifying the distillates through one or more purification treatments of solvent deasphalting, solvent extraction, hydrocracking, solvent dewaxing, catalytic dewaxing, or hydrorefining.

Examples of the synthetic oil include poly-α-olefins such as α-olefin homopolymers, α-olefin copolymers (e.g., C₈₋₁₄ α-olefin copolymers such as ethylene-α-olefin copolymers); isoparaffins; various esters such as polyol esters, and dibasic acid esters; various ethers such as polyphenyl ether; polyalkylene glycols; alkylbenzenes; alkylnaphthalenes; and GTL base oils obtained by isomerizing a wax (GTL wax (gas-to-liquid wax)) produced from a natural gas through Fischer-Tropsch synthesis.

The base oil for use in the present embodiment is preferably a base oil grouped in Groups 2, 3 and 4 in the base oil category of API (American Petroleum Institute), more preferably a base oil grouped in Group 3.

For the base oil (A), one alone or plural kinds of mineral oils may be used either singly or as combined, or one alone or plural kinds of synthetic oils may be used either singly or as combined. Further, one or more mineral oils and one or more synthetic oils may also be combined and used.

The kinematic viscosity and the viscosity index of the base oil (A) are not specifically limited, but from the viewpoint of bettering the wear resistance of the lubricating oil composition, the kinematic viscosity and the viscosity index each are preferably within the following range.

The kinematic viscosity at 100°C of the base oil (A) is preferably 2.0 mm²/s or more, more preferably 2.5 mm²/s or more, even more preferably 3.0 mm²/s or more, and is preferably 10.0 mm²/s or less, more preferably 8.0 mm²/s or less, even more preferably 6.0 mm²/s or less.

The viscosity index of the base oil (A) is preferably 80 or more, more preferably 90 or more, even more preferably 100 or more, further more preferably 105 or more.

In the case where the base oil (A) is a mixed base oil containing 2 or more kinds of base oils, the kinematic viscosity and the viscosity index of the mixed base oil may be good to fall within the above range.

In the lubricating oil composition of the present embodiment, the content of the base oil (A) is preferably 65% by mass or more based on the total amount (100% by mass) of the lubricating oil composition, more preferably 70% by mass or more, even more preferably 73% by mass or more, and is preferably 98% by mass or less, more preferably 95% by mass or less, even more preferably 90% by mass or less.

### <Metal-Based Detergent (B)>

The metal-based detergent (B) contains a calcium-based detergent (B1) (hereinafter this may be simply referred to as "component (B1)") in such a manner that the calcium atom-equivalent content thereof falls within a range of more than 100 ppm by mass and 600 ppm by mass or less based on the total amount of the lubricating oil composition, in which the magnesium atom-equivalent content of a magnesium-based detergent (B2) (hereinafter this may be simply referred to as "component (B2)") is less than 200 ppm by mass based on the total amount of the lubricating oil composition, and the sodium atom-equivalent content of a sodium-based detergent (B3) (hereinafter this may be simply referred to as "component (B3)") is less than 200 ppm by mass based on the total amount of the lubricating oil composition.

The lubricating oil composition of the present embodiment contains the component (B1) within the above-mentioned range and the content of the component (B3) therein is less than the above-mentioned upper limit, and accordingly the lubricating oil composition can prevent an occurrence of LSPI while securing the detergency required for a lubricating oil composition for internal combustion engines. Further, in this, the content of the component (B2) is controlled to be less than the above-mentioned limit, and the friction coefficient of the lubricating oil composition can be prevented from increasing, and the lubricating oil composition can therefore secure sufficient lubrication performance.

### (Calcium-Based Detergent (B1))

Examples of the component (B1) include calcium salts such as calcium salicylate, calcium phenate, and calcium sulfonate. Among these, from the viewpoint of detergency, calcium sulfonate and calcium phenate are preferred, and calcium sulfonate is more preferred.

The calcium salicylate is preferably a compound of a metal salicylate represented by the following general formula (b-1) in which M is a calcium atom; the calcium phenate is preferably a compound of a metal phenate represented by the following general formula (b-2) in which M' represents a calcium atom; and the calcium sulfonate is preferably a compound of a metal sulfonate represented by the following general formula (b-3) in which M is a calcium atom.

One alone or two or more kinds may be used as the component (B1) either singly or as combined.

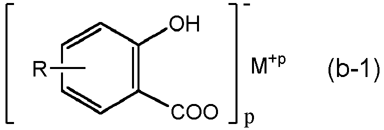

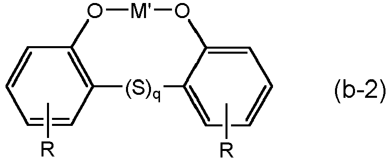

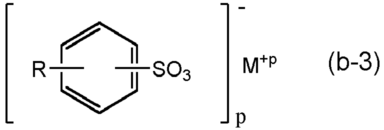

In the above general formulae (b-1) to (b-3), M represents a metal atom selected from an alkali metal or an alkaline earth metal, M' represents an alkaline earth metal. p represents a valence of M, and is 1 or 2. R represents a hydrogen atom or a hydrocarbon group having 1 or more and 18 or less carbon atoms. q represents an integer of 0 or more, and is preferably an integer of 0 or more and 3 or less.

Examples of the hydrocarbon group that can be selected for R include an alkyl group having 1 or more and 18 or less carbon atoms, an alkenyl group having 1 or more and 18 or less carbon atoms, a cycloalkyl group having 3 or more and 18 or less ring carbon atoms, an aryl group having 6 or more and 18 or less ring carbon atoms, an alkylaryl group having 7 or more and 18 or less carbon atoms, and an arylalkyl group having 7 or more and 18 or less carbon atoms.

The component (B1) may be any of neutral, basic or overbased ones, but is, from the viewpoint of detergency, preferably a basic or overbased one.

In the present specification, the basic or overbased metal-based detergent means one produced by reaction of a metal and an acidic organic compound, in which the amount of the metal is excessive over the stoichiometric amount thereof necessary for neutralization of the metal and the acidic organic compound. Specifically, when the total chemical equivalent of a metal in a metal-based detergent relative to the chemical equivalent of a metal in a metal salt (neutral salt) obtained through reaction according to the stoichiometric amount necessary for neutralization of a metal and an acidic organic compound is referred to as "metal ratio", the basic or overbased metal-based detergent has a metal ratio of more than 1. The metal ratio of the basic or overbased metal-based detergent for use in the present embodiment is preferably more than 1.3, more preferably 5 to 30, even more preferably 7 to 22, and may be 11. Specific examples of the basic or overbased metal-based detergent include one or more selected from the group consisting of the above-mentioned metal salicylates, metal phenates and metal sulfonates containing an excessive metal.

In the present specification, those having a total base number, as measured according to the measurement method to be mentioned hereinunder, of less than 50 mgKOH/g are defined to be "neutral"; those having a total base number of 50 mgKOH/g or more and less than 150 mgKOH/g are defined to be "basic"; and those having a total base number of 150 mgKOH/g or more are defined to be "overbased".

The total base number of the component (B1) is, from the viewpoint of detergency, preferably 5 mgKOH/g or more, more preferably 100 mgKOH/g or more, even more preferably 150 mgKOH/g or more, and is preferably 500 mgKOH/g or less, more preferably 450 mgKOH/g or less, even more preferably 400 mgKOH/g or less.

In the present specification, "base number" means a value measured in a perchloric acid method according to JIS K2501:2003.

In the lubricating oil composition of the present embodiment, the calcium atom-equivalent content of the component (B1) is more than 100 ppm by mass and 600 ppm by mass or less based on the total amount of the lubricating oil composition.

When the calcium atom-equivalent content of the component (B1) is 600 ppm by mass or less, the ash content can be sufficiently reduced, and LSPI can be suppressed from occurring. On the other hand, when the content of the component (B1) is more than 100 ppm by mass, sufficient detergency can be secured.

From the viewpoint of satisfying all the requirements of low ash content, LSPI suppressing effect and detergency on a higher level, the calcium atom-equivalent content of the component (B1) is preferably 200 ppm by mass or more based on the total amount of the lubricating oil composition, more preferably 300 ppm by mass or more, even more preferably 400 ppm by mass or more, and is preferably 590 ppm by mass or less, more preferably 570 ppm by mass or less, even more preferably 550 ppm by mass or less.

In the lubricating oil composition of the present embodiment, the content of the component (B1) is, from the viewpoint of satisfying all the requirements of low ash content, LSPI suppressing effect and detergency on a higher level and so far as the calcium atom-equivalent content of the component (B1) satisfies the above range (more than 100 ppm by mass and 600 ppm by mass or less), preferably 0.10% by mass or more based on the total amount (100% by mass) of the lubricating oil composition, more preferably 0.15% by mass or more, even more preferably 0.25% by mass or more, further more preferably 0.35% by mass or more, and is preferably 0.55% by mass or less, more preferably 0.50% by mass or less, even more preferably 0.48% by mass or less, further more preferably 0.46% by mass or less.

In the lubricating oil composition of the present embodiment, the content of the component (B1) based on the total amount (100% by mass) of the metal-based detergent (B) is, from the viewpoint of suppressing an occurrence of LSPI while also suppressing an increase in the friction coefficient, preferably 80% by mass or more, more preferably 90% by mass or more, even more preferably 95% by mass or more, and is preferably 100% by mass or less.

### (Magnesium-Based Detergent (B2))

Examples of the component (B2) include magnesium salts such as magnesium salicylate, magnesium phenate and magnesium sulfonate.

The magnesium salicylate includes a compound of the above general formula (b-1) in which M is a magnesium atom, the magnesium phenate includes a compound of the above general formula (b-2) in which M' is a magnesium atom, and the magnesium sulfonate includes a compound of the above general formula (b-3) in which M is a magnesium atom.

One alone or two or more kinds may be used as the component (B2) either singly or as combined.

The component (B2) may be any of neutral, basic or overbased ones, but is, from the viewpoint of detergency, preferably a basic or overbased one.

The total base number of the component (B2) is, from the viewpoint of detergency, preferably 5 mgKOH/g or more, more preferably 100 mgKOH/g or more, even more preferably 300 mgKOH/g or more, and is preferably 650 mgKOH/g or less, more preferably 550 mgKOH/g or less, even more preferably 450 mgKOH/g or less.

As described above, in the lubricating oil composition of the present embodiment, the magnesium atom-equivalent content of the component (B2) is less than 200 ppm by mass based on the total amount of the lubricating oil composition. When the magnesium atom-equivalent content of the component (B2) is less than 200 ppm by mass, the friction coefficient of the lubricating oil composition can be prevented from increasing and sufficient lubrication performance can be secured.

In the case where the lubricating oil composition of the present embodiment contains the component (B2), the magnesium atom-equivalent content thereof is preferably smaller from the viewpoint of reducing the friction coefficient, and is preferably less than 150 ppm by mass based on the total amount of the lubricating oil composition, more preferably less than 100 ppm by mass, even more preferably less than 50 ppm by mass, and may be 10 ppm by mass or more. However, from the viewpoint of reducing the friction coefficient, preferably, the lubricating oil composition of the present embodiment does not contain the component (B2).

In the case where the lubricating oil composition of the present embodiment contains the component (B2), the content thereof is, from the viewpoint of reducing the friction coefficient, preferably less than 0.20% by mass based on the total amount (100% by mass) of the lubricating oil composition more preferably less than 0.15% by mass, even more preferably less than 0.10% by mass, further more preferably less than 0.05% by mass, and may be 0.01% by mass or more, so far as the magnesium atom-equivalent content of the component (B2) is less than 200 pm by mass based on the total amount of the lubricating oil composition.

### (Sodium-Based Detergent (B3))

Examples of the component (B3) include sodium salts such as sodium sulfonate and sodium salicylate. The sodium salicylate includes a compound of the above-mentioned general formula (b-1) where M is a sodium atom and p is 1; and the sodium sulfonate includes a compound of the above-mentioned general formula (b-13) where M is a sodium atom and p is 1.

One alone or two or more kinds may be used as the component (B3) either singly or as combined.

In the case where the lubricating oil composition of the present invention contains the component (B3), the sodium atom-equivalent content thereof is preferably smaller from the viewpoint of suppressing LSPI, and is preferably less than 200 ppm by mass based on the total amount of the lubricating oil composition, more preferably less than 150 ppm by mass, even more preferably less than 100 ppm by mass, further more preferably less than 50 ppm by mass, further more preferably 0 ppm by mass.

In the case where the lubricating oil composition of the present invention contains the component (B3), the content thereof is preferably so controlled that the sodium atom-equivalent content thereof could fall within the above range, and is, specifically from the viewpoint of suppressing LSPI, preferably less than 0.20% by mass based on the total amount (100% by mass) of the lubricating oil composition, more preferably less than 0.15% by mass, even more preferably less than 0.10% by mass, further more preferably less than 0.05% by mass, further more preferably 0% by mass.

### (Other Metal-Based Detergents)

The lubricating oil composition of the present embodiment may contain any other metal-based detergent than the component (B1), the component (B2) and the component (B3) as the metal-based detergent (B) (hereinafter this may be simply referred to as "the other metal-based detergent"), within a range not detracting from the object of the present invention.

Examples of the other metal-based detergent include a metal salicylate, a metal phenate and a metal sulfonate containing any other metal atom than calcium, magnesium and sodium. Specifically, they include compounds of the above-mentioned general formulae (b-1) to (b-3) where M is a metal element selected from any other alkali metal or alkaline earth metal than calcium, magnesium and sodium, M' is any other alkaline earth metal than calcium and magnesium.

One alone or two or more kinds of the other metal-based detergents may be used either singly or as combined.

In the case where the lubricating oil composition of the present invention contains any other metal-based detergent, the metal atom-equivalent total content thereof is preferably less than 200 ppm by mass based on the total amount of the lubricating oil composition, more preferably less than 150 ppm by mass, even more preferably less than 100 ppm by mass, further more preferably less than 50 ppm by mass. However, from the viewpoint of reducing the friction coefficient, preferably, the lubricating oil composition of the present embodiment does not contain such other metal-based detergent.

In the case where the lubricating oil composition of the present invention contains any other metal-based detergent, the content thereof is preferably so controlled that the metal atom-equivalent content thereof can fall within the above range. Specifically, from the viewpoint of reducing the friction coefficient, the content is preferably less than 0.20% by mass based on the total amount (100% by mass) of the lubricating oil composition, more preferably less than 0.15% by mass, even more preferably less than 0.10% by mass, further more preferably less than 0.05% by mass.

In the lubricating oil composition of the present embodiment, the metal atom-equivalent total content of the metal-based detergent (B) is, from the viewpoint of satisfying good properties while reducing the ash content, preferably more than 100 ppm by mass based on the total amount of the lubricating oil composition, more preferably 200 ppm by mass or more, even more preferably 300 ppm by mass or more, further more preferably 400 ppm by mass or more, and is preferably 700 ppm by mass or less, more preferably 650 ppm by mass or less, even more preferably 600 ppm by mass or less, further more preferably 590 ppm by mass or less, further more preferably 570 ppm by mass or less, further more preferably 550 ppm by mass or less.

In the lubricating oil composition of the present embodiment, the content of the metal-based detergent (B) is, from the viewpoint of satisfying all the requirements of low ash content, LSPI suppressing effect and detergency on a higher level, preferably 0.10% by mass or more based on the total amount (100% by mass) of the lubricating oil composition, more preferably 0.15% by mass or more, even more preferably 0.25% by mass or more, further more preferably 0.35% by mass or more, and is preferably 0.60% by mass or less, more preferably 0.55% by mass or less, even more preferably 0.50% by mass or less, further more preferably 0.48% by mass or less, further more preferably 0.46% by mass or less.

### <Zinc Dialkyldithiophosphate (C)>

The lubricating oil composition of the present embodiment contains a zinc dialkyldithiophosphate (C) (hereinafter this may be simply referred to as "component (C)") in such a manner that the content ratio of the phosphorus atom derived from the component (C) to the calcium atom derived from the component (B1) [P/Ca] is 0.25 or more by mass.

The lubricating oil composition of the present embodiment contains the component (C) in such a specific ratio relative to the component (B1), and therefore can effectively suppress an occurrence of LSPI even when the content of the calcium-based detergent therein is small.

One alone or two or more kinds may be used as the component (C) either singly or as combined.

Not specifically limited, the component (C) is preferably a compound represented by the following general formula (c1). 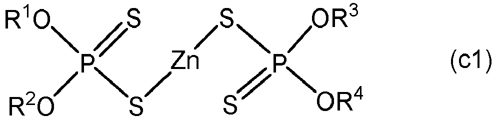 wherein R¹ to R⁴ each independently represent an alkyl group having 1 or more and 24 or less carbon atoms.

The alkyl group having 1 or more and 24 or less carbon atoms that R¹ to R⁴ represent may be a linear alkyl group or a branched alkyl group.

The carbon number of the alkyl group is preferably 2 or more and 12 or less, more preferably 3 or more and 7 or less.

The alkyl group is preferably a branched alkyl group, and examples of the branched alkyl group include an iso-propyl group, an iso-butyl group, a sec-butyl group, a tert-butyl group, an iso-pentyl group, a tert-pentyl group, an iso-hexyl group, a 2-ethylhexyl group, an iso-nonyl group, an iso-decyl group, an iso-tridecyl group, an iso-stearyl group, and an iso-eicosyl group. Among these, a sec-butyl group is preferred.

The component (C) is more preferably a zinc secondary dialkyldithiophosphate.

In the lubricating oil composition of the present embodiment, the content ratio of the phosphorus atom derived from the component (C) to the calcium atom derived from the component (B1) [P/Ca] is 0.25 or more by mass, as described above. When the content ratio [P/Ca] is 0.25 or more, even the composition having a low content of the calcium-based detergent can effectively suppress an occurrence of LSPI.

From the viewpoint that the composition having a low calcium-based detergent content and having a reduced ash content can sufficiently express the LSPI suppressing effect, the content ratio [P/Ca] is preferably 0.30 or more by mass, more preferably 0.35 or more, even more preferably 0.40 or more, and is preferably 0.90 or less, more preferably 0.80 or less, even more preferably 0.70 or less.

In the lubricating oil composition of the present embodiment, the phosphorus atom-equivalent content of the component (C) is, from the viewpoint that the composition having a low calcium-based detergent content and having a reduced ash content can sufficiently express the LSPI suppressing effect, preferably 100 ppm by mass or more based on the total amount of the lubricating oil composition, more preferably 150 ppm by mass or more, even more preferably 200 ppm by mass or more, and is preferably 450 ppm by mass or less, more preferably 400 ppm by mass or less, even more preferably 370 ppm by mass or less, so far as the content ratio [P/Ca] is 0.25 or more.

In the the lubricating oil composition of the present embodiment, the content of the component (C) is preferably so controlled that the phosphorus atom-equivalent content thereof can fall within the above range. Specifically, from the viewpoint that the composition having a low calcium-based detergent content and having a reduced ash content can sufficiently express the LSPI suppressing effect, the content is preferably 0.15% by mass or more based on the total content (100% by mass) of the lubricating oil composition, more preferably 0.20% by mass or more, even more preferably 0.30% by mass or more, and is preferably 0.65% by mass or less, more preferably 0.57% by mass or less, even more preferably 0.53% by mass or less, so far as the content ratio [P/Ca] is 0.25 or more.

### <Molybdenum-Containing Compound (D)>

The lubricating oil composition of the present embodiment further contains a molybdenum-containing compound (D) (hereinafter this may be simply referred to as "component (D)").

Containing a component (D), the lubricating oil composition of the present embodiment can reduce the friction coefficient and can attain sufficient lubrication performance.

The component (D) includes an organic compound containing a molybdenum compound, and is, from the viewpoint of reducing the friction coefficient, preferably one or more selected from the group consisting of a molybdenum dithiocarbamate (MoDTC) (D1) (hereinafter this may be referred to as "component (D1)") and a molybdenum dithiophosphate (MoDTP) (D2) (hereinafter this may be referred to as "component (D2)").

One alone or two or more kinds may be used as the component (D) either singly or as combined.

Examples of the component (D1) include a binuclear molybdenum dithiocarbamate containing 2 molybdenum atoms in one molecule, and a trinulcear molybdenum dithiocarbamate containing 3 molybdenum atoms in one molecule. Among these, a binuclear molybdenum dithiocarbamate is preferred.

The binuclear molybdenum dithiocarbamate is more preferably a compound represented by the following general formula (d1-1) and a compound represented by the following general formula (d1-2).

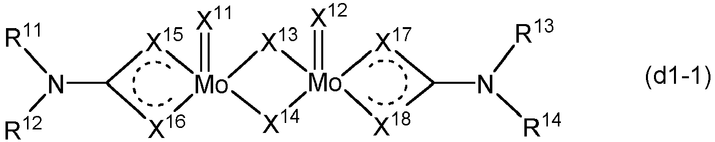

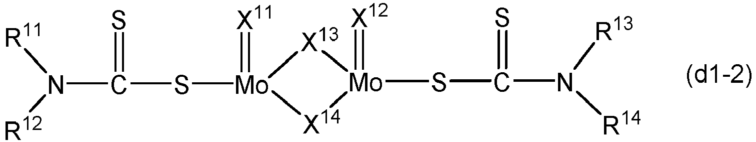

In the above general formulae (d1-1) and (d2-1), R¹¹ to R¹⁴ each independently represent a hydrocarbon group.

X¹¹ to X¹⁸ each independently represent an oxygen atom or a sulfur atom.

At least two of X¹¹ to X¹⁸ in the formula (d1-1) are sulfur atoms.

In the present embodiment, preferably, X¹¹ and X¹² are oxygen atoms and X¹³ to X¹⁸ are sulfur atoms in the formula (d1-1).

In the general formula (d1-1), a molar ratio of the sulfur atom to the oxygen atom in X¹¹ to X¹⁸ [sulfur atom/oxygen atom] is preferably 1/4 or more and 4/1 or less, more preferably 1/3 or more and 3/1 or less.

Also preferably X¹¹ to X¹⁴ in the formula (d1-2) are oxygen atoms.

In the general formulae (d1-1) and (d1-2), the carbon number of the hydrocarbon group that can be selected for R¹¹ for R¹⁴ is preferably 1 or more and 20 or less, more preferably 3 or more and 18 or less, even more preferably 4 or more and 16 or less, further more preferably 5 or more and 13 or less.

Specific examples of the hydrocarbon group that can be selected for R¹¹ for R¹⁴ include an alkyl group such as a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group and an octadecyl group; an alkenyl group such as an octenyl group, a nonenyl group, a decenyl group, an undecenyl group, a dodecenyl group, a tridecenyl group, a tetradecenyl group, and a pentadecenyl group; a cycloalkyl group such as a cyclohexyl group, a dimethylcyclohexyl group, an ethylcyclohexyl group, a methyl cyclohexylmethyl group, a cyclohexylethyl group, a propylcyclohexyl group, a butylcyclohexyl group, and a heptylcyclohexyl group; an aryl group such as a phenyl group, a naphthyl group, an anthracenyl group, a biphenyl group, and a terphenyl group; an alkylaryl group such as a tolyl group, a dimethylphenyl group, a butylphenyl group, a nonylphenyl group, a methylbenzyl group, and a dimethylnaphthyl group; and an arylalkyl group such as a phenylmethyl group, a phenylethyl group, and a diphenylmethyl group.

The component (D2) is preferably a compound represented by the following general formula (d2-1) and a compound represented by the following general formula (d2-2).

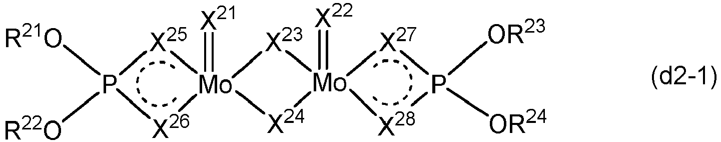

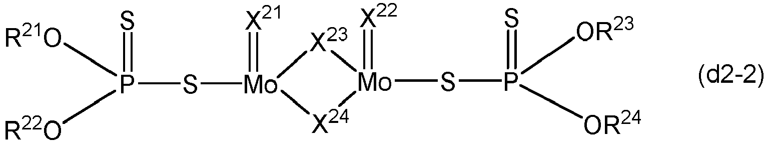

In the general formulae (d2-1) and (d2-2), R²¹ to R²⁴ each independently represent a hydrocarbon group.

X²¹ to X²⁸ each independently represent an oxygen atom or a sulfur atom. In the formula (d2-1), at least two of X²¹ to X²⁸ are sulfur atoms.

In the present embodiment, preferably, X²¹ and X²² are oxygen atoms and X²³ to X²⁸ are sulfur atoms in the general formula (d2-1).

In the general formula (d2-1), a molar ratio of the sulfur atom to the oxygen atom in X²¹ to X²⁸ [sulfur atom/oxygen atom] is, from the viewpoint of improving solubility in the base oil (A), preferably 1/4 or more and 4/1 or less, more preferably 1/3 or more and 3/1 or less.

In the general formula (d2-2), preferably, X²¹ and X²² are oxygen atoms and X²³ and X²⁴ are sulfur atoms.

In the general formula (d2-2), a molar ratio of the sulfur atom to the oxygen atom in X²¹ to X²⁴ [sulfur atom/oxygen atom] is, from the same viewpoint, preferably 1/3 or more and 3/1 or less, more preferably 1.5/2.5 or more and 2.5/1.5 or less.

The carbon number of the hydrocarbon group that can be selected for R²¹ to R²⁴ is preferably 1 or more and 20 or less, more preferably 3 or more and 18 or less, even more preferably 4 or more and 16 or less, further more preferably 5 or more and 12 or less.

Specific examples of the hydrocarbon group that can be selected for R²¹ to R²⁴ are the same as those of the hydrocarbon group that can be selected for R¹¹ to R¹⁴ in the above-mentioned general formulae (d1-1) and (d1-2).

In the lubricating oil composition of the present embodiment, the molybdenum atom-equivalent content of the component (D) is, from the viewpoint of reducing the ash content and more improving the friction-reducing effect of the lubricating oil composition, preferably 50 ppm by mass or more based on the total amount of the lubricating oil composition, more preferably 110 ppm by mass or more, even more preferably 150 ppm by mass or more, further more preferably 200 ppm by mass or more, and is preferably 600 ppm by mass or less, more preferably 500 ppm by mass or less, even more preferably 450 ppm by mass or less, further more preferably 400 ppm by mass or less.

In the lubricating oil composition of the present embodiment, the content of the component (D) is preferably so controlled that the molybdenum atom-equivalent content thereof falls within the above range. Specifically, from the viewpoint of reducing the ash content and more improving the friction-reducing effect of the lubricating oil composition, the content is preferably 0.05% by mass or more based on the total amount (100% by mass) of the lubricating oil composition, more preferably 0.08% by mass or more, even more preferably 0.12% by mass or more, further more preferably 0.15% by mass or more and is preferably 0.60% by mass or less, more preferably 0.50% by mass or less, even more preferably 0.45% by mass or less, further more preferably 0.40% by mass or less.

In the lubricating oil composition of the present embodiment, the total content of the component (A), the component (B), the component (C) and the component (D) is preferably 60% by mass or more based on the total amount (100% by mass) of the lubricating oil composition, more preferably 70% by mass or more, even more preferably 75% by mass or more, and is preferably 100% by mass or less, more preferably 90% by mass or less, even more preferably 80% by mass or less.

### <Additives for Lubricating Oil>

As needed, the lubricating oil composition of the present embodiment may contain additives for lubricating oil other than the above-mentioned components (hereinafter this may be simply referred to as "additives for lubricating oil") within a range not detracting from the object of the present invention.

Examples of the additives for lubricating oil include a viscosity index improver, a pour point depressant, an antioxidant, an ashless dispersant, an anti-wear agent, an extreme pressure agent, a friction modifier, an anti-foaming agent, a rust inhibitor, a corrosion inhibitor, and a metal deactivator.

One alone or two or more kinds of each of these additives for lubricating oil may be used either singly or as combined.

The content of each of these additives for lubricating oil can be appropriately controlled within a range not detracting from the advantageous effects of the present invention, and the content is generally 0.001% by mass or more based on the total amount (100% by mass) of the lubricating oil composition, preferably 0.005% by mass or more, more preferably 0.01% by mass or more, and is preferably 30% by mass or less, more preferably 27% by mass or less, even more preferably 24% by mass or less.

In the lubricating oil composition of the present embodiment, the total content of the additives for lubricating oil is preferably 5% by mass or more based on the total amount (100% by mass) of the lubricating oil composition, more preferably 10% by mass or more, even more preferably 15% by mass or more, and is preferably 35% by mass or less, preferably 30% by mass or less, more preferably 27% by mass or less, even more preferably 25% by mass or less.

### (Viscosity Index Improver)

Examples of the viscosity index improver include polymers such as a non-dispersant-type polymethacrylate, a dispersant-type polymethacrylate, an olefin-based copolymer (e.g., ethylene-propylene copolymer), a dispersant-type olefin-based copolymer, and a styrene-based copolymer (e.g., styrene-diene copolymer, styrene-isoprene copolymer).

### (Pour Point Depressant)

Examples of the pour point depressant include an ethylene-vinyl acetate copolymer, a condensate of a chloroparaffin and a naphthalene, a condensate of a chloroparaffin and a phenol, a polymethacrylate, and a polyalkylstyrene.

### (Antioxidant)

The antioxidant for use herein may be appropriately selected from any known antioxidants that have heretofore been used as an antioxidant for lubricating oil. Examples thereof include an amine-based antioxidant, a phenol-based antioxidant a molybdenum-based antioxidant, a sulfur-based antioxidant, and a phosphorus-based antioxidant.

### (Ashless Dispersant)

Examples of the ashless dispersant include a succinimide, a polybutenylsuccinimide, a benzylamine, a succinate, and boron-modified derivatives thereof.

### (Anti-wear Agent)

Examples of the anti-wear agent include zinc phosphates except the component (C); sulfur-containing compounds such as zinc dithiocarbamates, disulfides, sulfurized olefins, sulfurized oils and fats, sulfurized esters, thiocarbonates, thiocarbamates, and polysulfides; phosphorus-containing compounds such as phosphites, phosphates, phosphonates, and amine salts or metal salts thereof; and sulfur and phosphorus-containing anti-wear agents such as thiophosphites, thiophosphates, thiophosphonates, and amine salts or metal salts thereof.

### (Extreme-Pressure Agent)

Examples of the extreme-pressure agent include sulfur-containing extreme-pressure agents such as sulfides, sulfoxides, sulfones, and thiophosphinates; halogen-containing extreme-pressure agents such as chlorohydrocarbons; and organic metal-containing extreme-pressure agents. Among the above-mentioned anti-wear agents, compounds having a function as an extreme-pressure agent can also be used.

### (Friction Modifier)

Examples of the friction modifier include ash-free friction modifiers such as aliphatic amines, fatty acid esters, fatty acid amides, fatty acids, aliphatic alcohols, and aliphatic ethers having at least one alkyl or alkenyl group having 6 or more and 30 or less carbon atoms in the molecule; and oils and fats, amines, amides, sulfurized esters, phosphates, phosphites, and phosphate amine salts.

### (Anti-foaming Agent, Rust Inhibitor, Corrosion Inhibitor, Metal Deactivator)

Examples of the anti-foaming agent include a silicone oil, a fluorosilicone oil, and a fluoroalkyl ether.

Examples of the rust inhibitor include fatty acids, alkenylsuccinic acid half esters, fatty acid soaps, alkyl sulfonate salts, polyalcohol fatty acid esters, fatty acid amines, paraffin oxides, and alkyl polyoxyethylene ethers.

Examples of the corrosion inhibitor and the metal deactivator include benzotriazole compounds, tolyltriazole compounds, thiadiazole compounds, imidazole compounds, and pyrimidine compounds.

### <Properties of Lubricating Oil Composition>

The kinematic viscosity at 100°C of the lubricating oil composition of the present embodiment is preferably 3.5 mm²/s or more, more preferably 4.5 mm²/s or more, even more preferably 6.0 mm²/s or more, and is preferably 16.5 mm²/s or less, more preferably 12.5 mm²/s or less, even more preferably 10.0 mm²/s or less.

The friction coefficient of the lubricating oil composition of the present embodiment, as measured under the condition described in the section of Examples given hereinunder, is preferably 0.080 or less, more preferably 0.070 or less, even more preferably 0.060 or less, further more preferably 0.055 or less. The friction coefficient is preferably smaller, but may be 0.010 or more, or may be 0.030 or more.

In use of the lubricating oil composition of the present embodiment in a spark-ignition internal combustion engine, when the spark-ignition internal combustion engine is driven under a low-load condition at a rotation number of 2000 rpm, at a torque of 32 Nm and under a brake mean effective pressure of 2 bar for 5 minutes and then driven under a high-load condition at a rotation number of 2000 rpm, at a torque of 350 Nm and under a brake mean effective pressure of 22 bar for 15 minutes, as one combustion cycle, and when the engine is driven for a total of 9 combustion cycles, the total number of pre-ignitions having occurred under the high-load condition is preferably 3 or less, more preferably 2 or less, even more preferably 1 or less, further more preferably 0. A more specific method for measuring the pre-ignition occurrence frequency is as described in the section of Examples given hereinunder.

### [Production Method for Lubricating Oil Composition]

The lubricating oil composition of the present embodiment can be produced according to a method for producing a lubricating oil composition for internal combustion engines, including mixing:
a base oil (A),
a metal-based detergent (B) containing a calcium-based detergent (B1),
a zinc dialkyldithiophosphate (C), and
a molybdenum-containing compound (D),
wherein:
   the calcium atom-equivalent content of the component (B1) is more than 100 ppm by mass and 600 ppm by mass or less based on the total amount of the lubricating oil composition,
   the magnesium atom-equivalent content of a magnesium-based detergent (B2) is less than 200 ppm by mass based on the total amount of the lubricating oil composition,
   the sodium atom-equivalent content of a sodium-based detergent (B3) is less than 200 ppm by mass based on the total amount of the lubricating oil composition,
   the content ratio of the phosphorus atom derived from the component (C) to the calcium atom derived from the component (B1) [P/Ca] is 0.25 or more by mass, and
   the sulfated ash content is 0.7% by mass or less.

Not specifically limited, the method of mixing the above-mentioned components is, for example, a method including a step of blending the component (B), the component (C) and the component (D) in the base oil (A). As the case may be, the above-mentioned other additives for lubricating oil may also be blended together with the components (A) to (D). Also as the case may be, a diluent oil or the like may be added to each component to form a solution (dispersion), and the resultant solutions or dispersions may be blended. After the components have been blended, preferably, they are stirred and uniformly dispersed according to a known method.

### [Use of Lubricating Oil Composition]

The lubricating oil composition of the present embodiment has a sufficient friction-reducing effect, can suppress an occurrence of LSPI in spark-ignition internal combustion engines, and has reduced adverse effects on exhaust gas purification devices.

The lubricating oil composition of the present embodiment is used in internal combustion engines and is especially preferably used as a lubricating oil for an engine equipped with a forced-induction mechanism. In addition, the lubricating oil composition of the present embodiment has a reduced sulfated ash content and is therefore favorably used for internal combustion engines equipped with an exhaust gas purification device that contains an exhaust gas catalyst. Specifically, the present invention also provides use of the following [i] to [v].
[i] Use of the lubricating oil composition of the present embodiment in internal combustion engines.
[ii] Use of the lubricating oil composition of the present embodiment in spark-ignition internal combustion engines.
[iii] Use of the lubricating oil composition of the present embodiment in forced-induction mechanism-mounted engines.
[iv] Use of the lubricating oil composition of the present embodiment in internal combustion engines equipped with an exhaust gas purification device containing an exhaust gas catalyst.
[v] Use of the lubricating oil composition of the present embodiment in a method for suppressing pre-ignition.

Also the present embodiment can provide an internal combustion engine of the following [1], and a method of the following [2].
[1] A spark-ignition internal combustion engine, using a lubricating oil composition for internal combustion engines that contains:
   a base oil (A),
   a metal-based detergent (B) containing a calcium-based detergent (B1),
   a zinc dialkyldithiophosphate (C), and
   a molybdenum-containing compound (D),
   wherein:
      the calcium atom-equivalent content of the component (B1) is more than 100 ppm by mass and 600 ppm by mass or less based on the total amount of the lubricating oil composition,
      the magnesium atom-equivalent content of a magnesium-based detergent (B2) is less than 200 ppm by mass based on the total amount of the lubricating oil composition,
      the sodium atom-equivalent content of a sodium-based detergent (B3) is less than 200 ppm by mass based on the total amount of the lubricating oil composition,
      the content ratio of the phosphorus atom derived from the component (C) to the calcium atom derived from the component (B1) [P/Ca] is 0.25 or more by mass, and
      the sulfated ash content is 0.7% by mass or less.
[2] A method for suppressing pre-ignition, including lubricating a spark-ignition internal combustion engine with a lubricating oil composition for internal combustion engines, wherein the lubricating oil composition contains:
   a base oil (A),
   a metal-based detergent (B) containing a calcium-based detergent (B1),
   a zinc dialkyldithiophosphate (C), and
   a molybdenum-containing compound (D),
   and wherein:
      the calcium atom-equivalent content of the component (B1) is more than 100 ppm by mass and 600 ppm by mass or less based on the total amount of the lubricating oil composition,
      the magnesium atom-equivalent content of a magnesium-based detergent (B2) is less than 200 ppm by mass based on the total amount of the lubricating oil composition,
      the sodium atom-equivalent content of a sodium-based detergent (B3) is less than 200 ppm by mass based on the total amount of the lubricating oil composition,
      the content ratio of the phosphorus atom derived from the component (C) to the calcium atom derived from the component (B1) [P/Ca] is 0.25 or more by mass, and
      the sulfated ash content is 0.7% by mass or less.

Preferred embodiments of the components of the lubricating oil composition for internal combustion engines for use in the above [1] and [2], and preferred properties of the lubricating oil composition for internal combustion engines are as mentioned above.

In the embodiments of the above [1] and [2], the spark-ignition internal combustion engine is driven under a load at a brake mean effective pressure (BMEF) of preferably 20 bar or more, more preferably under a load at 21 bar or more, even more preferably under a load at 22 bar or more.

The brake mean effective pressure (BMEF) is a value calculated by dividing the work actually obtained from engine (the work calculated by subtracting the motion resistance of auxiliary machines and pistons from the indicated work) by the piston displacement, and is one criterion for judging the combustion efficiency of an engine.

In the embodiments of the above [1] and [2], when a spark-ignition internal combustion engine lubricated with the lubricating oil composition for internal combustion engines of the present embodiment is driven under a low-load condition at a rotation number of 2000 rpm, at a torque of 32 Nm and under a brake mean effective pressure of 2 bar for 5 minutes and then driven under a high-load condition at a rotation number of 2000 rpm, at a torque of 350 Nm and under a brake mean effective pressure of 22 bar for 15 minutes, as one combustion cycle, and when the engine is driven for a total of 9 combustion cycles, the total number of pre-ignitions having occurred under the high-load condition is preferably 3 or less, more preferably 2 or less, even more preferably 1 or less, further more preferably 0. A more specific method for measuring the pre-ignition occurrence frequency is as described in the section of Examples given hereinunder.

### Examples

Next, the present invention is described in more detail with reference to Examples, but the present invention is not whatsoever restricted by these Examples. The properties of the components used in Examples and Comparative Examples and the lubricating oil compositions obtained therein were measured according to the following methods.

### <Kinematic Viscosity at 100°C>

Measured or calculated according to JIS K 2283:2000.

### <Content of Calcium Atom, Magnesium Atom, Sodium Atom, Phosphorus Atom, Zinc Atom and Molybdenum Atom>

Measured according to ASTM D4951.

### <Sulfated Ash Content>

Measured according to JIS K2272:1998.

### Examples 1 to 5, Comparative Examples 1 to 9

The base oil and various additives shown below were blended at the blending ratio shown in Table 1, and fully mixed to prepare lubricating oil compositions. The kinematic viscosity at 100°C of the lubricating oil composition was controlled to be 7.8 mm²/s.

The base oil and various additives used in Examples and Comparative Examples are as shown below.

### (Component (A))

Base Oil: base oil grouped in Group 3 in the API base oil category, kinematic viscosity at 40°C = 20.0 mm²/s, kinematic viscosity at 100°C = 4.5 mm²/s, viscosity index = 123.

### (Component (B))

Component (B1) Ca Sulfonate: calcium sulfonate, base number 300 mgKOH/g, calcium atom content = 11.7% by mass.
Component (B2) Mg Sulfonate: magnesium sulfonate, base number 400 mgKOH/g, magnesium atom content = 9.7% by mass.
Component (B3) Na Sulfonate: sodium sulfonate, base number 450 mgKOH/g, sodium atom content = 16.7% by mass.

### (Component (C))

ZnDTP: zinc dialkyldithiophosphate (zinc dialkyldithiophosphate of general formula (c1) where R¹ to R⁴ each are an alkyl group having 4 to 6 carbon atoms), phosphorus atom content = 7.1% by mass.

### (Component (D))

MoDTC: (by ADEKA Corporation), molybdenum atom content = 10.0% by mass, sulfur atom content = 11.5% by mass. Binuclear molybdenum dialkyldithiocarbamate represented by general formula (d1-2), Adeka Sakura-Lube 525, corresponding to component (D).

### (Other Components)

Viscosity index improver: polymethacrylate, Mw = 600,000.

Pour point depressant: polymethacrylate, Mw = 70,000.

Other additives: anti-wear agent, phenol-based antioxidant, amine-based antioxidant, polybutenylsuccinimide, boron-modified polybutenylsuccinimide, corrosion inhibitor.

The prepared lubricating oil compositions were given the following tests. The results are shown in Table 1.

### [DPF Test]

Using a 1.9 L straight-four engine by Volkswagen AG and DPF (SD031) by Ibiden Co., Ltd., the amount of deposits on DPF was measured. Regarding the test condition in driving, a DPF conditional phase (rotation number 2000 to 4000 rpm, torque 90 to MAX Nm, oil temperature 125°C) and a DPF loading phase (rotation number 1900 to 4000 rpm, torque 40 to MAX Nm) were repeated according to the test method of VW TDI-PD DPF (PV 1485).

### [Pre-ignition Occurrence Frequency]

A 2.0 L straight-four engine (Ecotec Engine) by GM Corporation was used. A GMW17244 test method was referred to for the test condition. Briefly, after warming-up (rotation number 2000 rpm, torque 100 Nm, brake mean effective pressure 6 bar, driving time 30 minutes), low-load condition driving (rotation number 2000 rpm, torque 32 Nm, brake mean effective pressure 2 bar, driving time 5 minutes) and high-load condition driving (rotation number 2000 rpm, torque 350 Nm, brake mean effective pressure 22 bar, driving time 15 minutes) were repeated for a total of 9 times each, and the number of pre-ignitions having occurred during the high-load condition driving was counted. The pre-ignition was defined to have occurred when the maximum combustion pressure was higher by 30% or more than a mean value of a normal level and when the crank angle at the start of combustion was earlier by 5 degrees or more than a normal level.

### [Friction Coefficient]

The friction coefficient was evaluated in an SRV test by Optimol Instruments GmbH. As test pieces, a cylinder (φ15 mm × 22 mm) and a disc (φ24 mm × 7.9 mm) of AISI52100 were used, and under the condition of a load of 400 N, an amplitude of 1.5 mm, a frequency of 50 Hz and a temperature of 80°C for 30 minutes, each sample was evaluated, and an average friction coefficient for the last one minute was calculated.

**Table 1**

| | | | | Example | | | | | Comparative Example | | | | | | | | |
|---|---|---|---|---|---|---|---|---|---|---|---|---|---|---|---|---|---|
| | | | | 1 | 2 | 3 | 4 | 5 | 1 | 2 | 3 | 4 | 5 | 6 | 7 | 8 | 9 |
| Composition | Component (A) | Base Oil | mass% | 82.11 | 81.71 | 81.31 | 81.21 | 81.51 | 82.21 | 81.91 | 81.66 | 82.01 | 81.81 | 81.26 | 81.41 | 80.01 | 81.41 |
| | Component (B) | Component (B1) Ca Sulfonate | mass% | 0.25 | 0.45 | 0.45 | 0.45 | 0.45 | 0.45 | 0.45 | 0.45 | 0.45 | 0.45 | 0.45 | 0.45 | 1.55 | 0.45 |
| | | Component (B2) Mg Sulfonate | mass% | | | | 0.10 | | | | | | | 0.25 | 0.30 | | |
| | | Component (B3) Na Sulfonate | mass% | | | | | | | | | | | | | | 0.15 |
| | Component (C) | ZnDTP | mass% | 0.20 | 0.30 | 0.50 | 0.50 | 0.30 | | 0.10 | 0.15 | | | 0.30 | 0.30 | 1.10 | 0.30 |
| | Component (D) | MoDTC | mass% | 0.10 | 0.20 | 0.40 | 0.40 | 0.40 | | 0.20 | 0.40 | 0.20 | 0.40 | 0.40 | 0.20 | | 0.20 |
| | Other Components | Viscosity Index Improver | mass% | 4.00 | 4.00 | 4.00 | 4.00 | 4.00 | 4.00 | 4.00 | 4.00 | 4.00 | 4.00 | 4.00 | 4.00 | 4.00 | 4.00 |
| | | Pour Point Depressant | mass% | 0.20 | 0.20 | 0.20 | 0.20 | 0.20 | 0.20 | 0.20 | 0.20 | 0.20 | 0.20 | 0.20 | 0.20 | 0.20 | 0.20 |
| | | Other Additive | mass% | 13.14 | 13.14 | 13.14 | 13.14 | 13.14 | 13.14 | 13.14 | 13.14 | 13.14 | 13.14 | 13.14 | 13.14 | 13.14 | 13.14 |
| | | Total | mass% | 100.00 | 100.00 | 100.00 | 100.00 | 100.00 | 100.00 | 100.00 | 100.00 | 100.00 | 100.00 | 100.00 | 100.00 | 100.00 | 100.00 |
| Element Content | Component (B1)-derived Ca | | mass ppm | 290 | 530 | 530 | 530 | 530 | 530 | 530 | 530 | 530 | 530 | 530 | 530 | 1810 | 530 |
| | Component (B2)-derived Mg | | mass ppm | 0 | 0 | 0 | 100 | 0 | 0 | 0 | 0 | 0 | 0 | 250 | 300 | 0 | 0 |
| | Component (B3)-derived Na | | mass ppm | 0 | 0 | 0 | 0 | 0 | 0 | 0 | 0 | 0 | 0 | 0 | 0 | 0 | 250 |
| | Component (C)-derived P | | mass ppm | 140 | 220 | 360 | 360 | 220 | 0 | 70 | 110 | 0 | 0 | 220 | 220 | 780 | 220 |
| | Component (C)-derived Zn | | mass ppm | 170 | 260 | 430 | 430 | 260 | 0 | 90 | 130 | 0 | 0 | 260 | 260 | 950 | 260 |
| | Component (C)-derived Mo | | mass ppm | 100 | 190 | 380 | 380 | 380 | 0 | 190 | 380 | 190 | 380 | 380 | 190 | 0 | 190 |
| | Component (B)-derived Metal Atoms | | mass ppm | 290 | 530 | 530 | 630 | 530 | 530 | 530 | 530 | 530 | 530 | 780 | 830 | 1810 | 830 |
| Content of Component (B1) based on total amount (100% by mass) of component (B) | | | mass% | 100 | 100 | 100 | 82 | 100 | 100 | 100 | 100 | 100 | 100 | 64 | 60 | 100 | 75 |
| P/Ca Ratio | | | by mass | 0.48 | 0.42 | 0.68 | 0.68 | 0.42 | - | 0.13 | 0.21 | - | - | 0.42 | 0.42 | 0.43 | 0.42 |
| Sulfated Ash Content | | | mass% | 0.14 | 0.24 | 0.28 | 0.31 | 0.24 | 0.17 | 0.20 | 0.22 | 0.18 | 0.19 | 0.33 | 0.34 | 0.79 | 0.37 |
| Evaluation Results | DPF Test | | Score | A | A | A | A | A | A | A | A | A | A | A | A | C | A |
| | Number of Pre-ignitions | | number | 0 | 0 | 0 | 0 | 0 | 15 | 6 | 4 | 13 | 20 | 0 | 0 | 0 | 8 |
| | Friction Coefficient | | - | 0.060 | 0.052 | 0.050 | 0.063 | 0.048 | 0.100 | 0.058 | 0.054 | 0.053 | 0.049 | 0.073 | 0.079 | 0.110 | 0.055 |

As in Table 1, the lubricating oil compositions of Examples 1 to 5 of the present embodiment all prevented LSPI even in the test under a high-load environment employed in the present embodiment, and had a low friction coefficient, and had excellent results also in the DPF test.

On the other hand, the lubricating oil composition of Comparative Example 1 is a case not containing the component (C) and the component (D) in the present embodiment and having a reduced content of the calcium-based detergent (component (B1)), and this caused frequent LSPIs in the test under a high-load environment employed in the present embodiment. From this, it is known that LSPI in a high-load environment could not be effectively prevented by mere reduction in the calcium atom content.

The lubricating oil compositions of Comparative Examples 2 and 3 where the content ratio [P/Ca] is less than 0.25, and those of Comparative Examples 4 and 5 not containing the component (C) were insufficient in point of suppressing LSPI. Further, it is known that the lubricating oil compositions of Comparative Examples 6 and 7 containing an Mg sulfonate as a metal-based detergent in a magnesium atom-equivalent amount of 200 ppm by mass or more had a high friction coefficient and could not attain sufficient lubrication performance. The lubricating oil composition of Comparative Example 8 in which the content of Ca sulfonate was more than 600 ppm by mass had a bad result in the DPF test though it could suppress LSPI. Further, the lubricating oil composition of Comparative Example 9 containing Na sulfonate in a sodium atom-equivalent amount of 200 ppm by mass or more was insufficient in point of suppressing LSPI.

## Claims

1. A lubricating oil composition for internal combustion engines, comprising:
a base oil (A),
a metal-based detergent (B) containing a calcium-based detergent (B1),
a zinc dialkyldithiophosphate (C), and
a molybdenum-containing compound (D),
wherein:
the calcium atom-equivalent content of the component (B1) is more than 100 ppm by mass and 600 ppm by mass or less based on the total amount of the lubricating oil composition,
the magnesium atom-equivalent content of a magnesium-based detergent (B2) is less than 200 ppm by mass based on the total amount of the lubricating oil composition,
the sodium atom-equivalent content of a sodium-based detergent (B3) is less than 200 ppm by mass based on the total amount of the lubricating oil composition,
the content ratio of the phosphorus atom derived from the component (C) to the calcium atom derived from the component (B1) [P/Ca] is 0.25 or more by mass, and
the sulfated ash content is 0.7% by mass or less.

2. The lubricating oil composition for internal combustion engines according to claim 1, wherein the molybdenum atom-equivalent content of the component (D) is 50 ppm by mass or more and 600 ppm by mass or less based on the total amount of the lubricating oil composition.

3. The lubricating oil composition for internal combustion engines according to claim 1 or 2, wherein the component (D) is one or more selected from the group consisting of a molybdenum dithiocarbamate (D1) and a molybdenum dithiophosphate (D2).

4. The lubricating oil composition for internal combustion engines according to any one of claims 1 to 3, wherein the phosphorus atom-equivalent content of the component (C) is 100 ppm by mass or more based on the total amount of the lubricating oil composition.

5. A method for suppressing pre-ignition, using the lubricating oil composition for internal combustion engines of any one of claims 1 to 4 to lubricate a spark-ignition internal combustion engine.

6. The method for suppressing pre-ignition according to claim 5, wherein the spark-ignition internal combustion engine is driven under a load of a brake mean effective pressure (BMEP) of 20 bar or more.

7. The method for suppressing pre-ignition according to claim 5, wherein the lubricated spark-ignition internal combustion engine is driven under a low-load condition at a rotation number of 2000 rpm, at a torque of 32 Nm and under a brake mean effective pressure of 2 bar for 5 minutes and then driven under a high-load condition at a rotation number of 2000 rpm, at a torque of 350 Nm and under a brake mean effective pressure of 22 bar for 15 minutes, as one combustion cycle, and when the engine is driven for a total of 9 combustion cycles, the total number of pre-ignitions having occurred under the high-load condition is 3 or less.

8. A method for producing a lubricating oil composition for internal combustion engines, comprising mixing:
a base oil (A),
a metal-based detergent (B) containing a calcium-based detergent (B1),
a zinc dialkyldithiophosphate (C), and
a molybdenum-containing compound (D),
wherein:
the calcium atom-equivalent content of the component (B1) is more than 100 ppm by mass and 600 ppm by mass or less based on the total amount of the lubricating oil composition,
the magnesium atom-equivalent content of a magnesium-based detergent (B2) is less than 200 ppm by mass based on the total amount of the lubricating oil composition,
the sodium atom-equivalent content of a sodium-based detergent (B3) is less than 200 ppm by mass based on the total amount of the lubricating oil composition,
the content ratio of the phosphorus atom derived from the component (C) to the calcium atom derived from the component (B1) [P/Ca] is 0.25 or more by mass, and
the sulfated ash content is 0.7% by mass or less.
